# EUROPEAN PATENT APPLICATION

(11) **EP 4 339 740 A1**
(43) Date of publication of application: **20.03.2024**
(21) Application number: 22196636.9
(22) Date of filing: 20.09.2022
(51) Int. Cl.: G06F 3/01

(54) **CONTROLLER, CONTROL METHOD, AND WEARABLE TRACKING SYSTEM**

(30) Priority: 15.09.2022 US 202217945118
(71) Applicant: HTC Corporation, Taoyuan City 330, (TW)
(72) Inventor: Yang, Wen-Shan, Taoyuan City (TW); Hsieh, SyuanYu, Taoyuan City (TW)
(74) Representative: Wagner & Geyer

(57) **Abstract**

A controller is provided. The controller is adapted to determine a position conversion relationship between a predetermined position of a body part of a user and a tracking position of a wearing part of the user. The wearing part is where a wearable device is disposed on the user. The controller is configured to: obtain a camera data of a previous moment from a camera, wherein the camera data comprises an image of a wearable device; obtain a sensor data of the previous moment from a sensor of the wearable device; determine the position conversion relationship based on the camera data of the previous moment and the sensor data of the previous moment; and output a fusion data of the wearing part of a current moment based on the position conversion relationship.

## Description

### BACKGROUND

### Technical Field

The disclosure relates to a controller; particularly, the disclosure relates to a controller, a control method, and a wearable tracking system.

### Description of Related Art

In order to bring an immersive experience to user, various technologies, such as augmented reality (AR) and virtual reality (VR), are constantly being developed. AR technology allows users to bring virtual elements to the real-world. VR technology allows users to enter a whole new virtual world to experience a different life. However, these types of devices are usually bulky and difficult to use.

### SUMMARY

The disclosure is direct to a controller, a control method, and a wearable tracking system, so as to improve tracking the position of a wearable device.

In this disclosure, a controller is provided. The controller is adapted to determine a position conversion relationship between a predetermined position of a body part of a user and a tracking position of a wearing part of the user. The wearing part is where a wearable device is disposed on the user. The controller is configured to: obtain a camera data of a previous moment from a camera, wherein the camera data includes an image of the wearable device; obtain a sensor data of the previous moment from a sensor of the wearable device; determine the position conversion relationship based on the camera data of the previous moment and the sensor data of the previous moment; and output a fusion data of the wearing part of a current moment based on the position conversion relationship.

In this disclosure, a control method for a wearable device is provided. The control method for a wearable device includes: obtaining a camera data of a previous moment from a camera, wherein the camera data includes an image of the wearable device; obtaining a sensor data of the previous moment from a sensor of the wearable device; determining a position conversion relationship based on the camera data of the previous moment and the sensor data of the previous moment, wherein the position conversion relationship indicates a relationship between a predetermined position of a body part of a user and a tracking position of a wearing part of the user and the wearing part is where the wearable device is disposed on the user; and outputting a fusion data of the wearing part of a current moment based on the position conversion relationship.

In this disclosure, a wearable tracking system is provided. The wearable tracking system, includes a camera, a wearable device, and a controller. The camera is configured to obtain a camera data of a previous moment, wherein the camera data includes an image of the wearable device. The wearable device includes a sensor. The sensor is configured to obtain a sensor data of a previous moment. The controller is configured to: determine a position conversion relationship based on the camera data of the previous moment and the sensor data of the previous moment, wherein the position conversion relationship indicates a relationship between a predetermined position of a body part of a user and a tracking position of a wearing part of the user and the wearing part is where the wearable device is disposed on the user; and output a fusion data of the wearing part of a current moment based on the position conversion relationship.

Based on the above, according to the controller, the control method, and the wearable tracking system of the disclosure, since the position conversion relationship is determined, the fusion data based on the reflects the user's operation more precisely and thereby improving the user experience.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram of a wearable tracking system according to an embodiment of the disclosure.
FIG. 2 is a schematic diagram of a wearable device disposed on a wearing part of a user according to an embodiment of the disclosure.
FIG. 3 is a schematic diagram of a wearable device disposed on a wearing part of a user according to an embodiment of the disclosure.
FIG. 4 is a schematic flowchart of a control method according to an embodiment of the disclosure.
FIG. 5A is a schematic diagram of a tracking the user according to an embodiment of the disclosure.
FIG. 5B is a schematic diagram of a tracking the user according to an embodiment of the disclosure.
FIG. 6 is a schematic flowchart of a control method according to an embodiment of the disclosure.

### DESCRIPTION OF THE EMBODIMENTS

Reference will now be made in detail to the exemplary embodiments of the disclosure, examples of which are illustrated in the accompanying drawings. Whenever possible, the same reference numbers are used in the drawings and the description to refer to the same or like components.

Certain terms are used throughout the specification and appended claims of the disclosure to refer to specific components. Those skilled in the art should understand that electronic device manufacturers may refer to the same components by different names. This article does not intend to distinguish those components with the same function but different names. In the following description and rights request, the words such as "comprise" and "include" are open-ended terms, and should be explained as "including but not limited to...".

The term "coupling (or connection)" used throughout the whole specification of the present application (including the appended claims) may refer to any direct or indirect connection means. For example, if the text describes that a first device is coupled (or connected) to a second device, it should be interpreted that the first device may be directly connected to the second device, or the first device may be indirectly connected through other devices or certain connection means to be connected to the second device. The terms "first", "second", and similar terms mentioned throughout the whole specification of the present application (including the appended claims) are merely used to name discrete elements or to differentiate among different embodiments or ranges. Therefore, the terms should not be regarded as limiting an upper limit or a lower limit of the quantity of the elements and should not be used to limit the arrangement sequence of elements. In addition, wherever possible, elements/components/steps using the same reference numerals in the drawings and the embodiments represent the same or similar parts. Reference may be mutually made to related descriptions of elements/components/steps using the same reference numerals or using the same terms in different embodiments.

It should be noted that in the following embodiments, the technical features of several different embodiments may be replaced, recombined, and mixed without departing from the spirit of the disclosure to complete other embodiments. As long as the features of each embodiment do not violate the spirit of the disclosure or conflict with each other, they may be mixed and used together arbitrarily.

In order to bring an immersive experience to user, various technologies, such as augmented reality (AR) and virtual reality (VR), are constantly being developed. AR technology allows users to bring virtual elements to the real-world. VR technology allows users to enter a whole new virtual world to experience a different life. However, these types of devices are usually bulky and difficult to use.

For example, some of the devices require the user to hold a control device on the hand to perform operations, which is not so intuitive. In addition, some of the devices use a camera to capture the user's behavior, which require the user to stay in the field of view (FOV) of the camera. Otherwise, when the user stays in the blind spot of the camera, the device will lose the tracking of the user. Therefore, how to make the user more easy and intuitive to interact with the virtual elements has been a goal that the people skilled in the art want to improve.

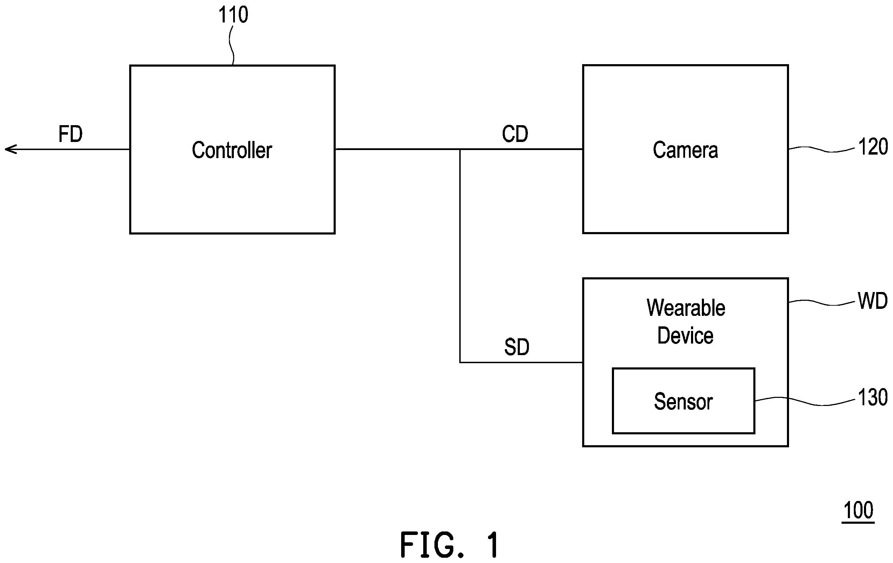

FIG. 1 is a schematic diagram of a wearable tracking system according to an embodiment of the disclosure. With reference to Fig. 1, in one embodiment, a wearable tracking system 100 includes a controller 110, a camera 120, and a sensor 130. The sensor 130 is included in a wearable device WD configured to disposed on a wearing part of a user. In one embodiment, the wearing part may be at least one limb of the user. In another embodiment, the wearing part may be at least one finger of the user, and this disclosure is not limited thereto.

In one embodiment, the controller 110 includes, for example, a microcontroller unit (MCU), a central processing unit (CPU), a microprocessor, a digital signal processor (DSP), a programmable controller, a programmable logic device (PLD), other similar devices, or a combination of these devices. The disclosure is not limited thereto. In addition, in an embodiment, each of functions of the controller 110 may be achieved as multiple program codes. The program codes are stored in a memory, and executed by the controller 110. Alternatively, in an embodiment, each of the functions of the controller 110 may be achieved as one or more circuits. The disclosure does not limit the use of software or hardware to achieve the functions of the controller 110. In one embodiment, the controller 110 may be disposed on a wearable head-mounted display (HMD), wearable glasses (e.g., AR/VR goggles), an electronic device, other similar devices, or a combination of these devices. However, the disclosure is not limited thereto.

In one embodiment, the camera 120 includes, for example, a complementary metal oxide semiconductor (CMOS) camera or a charge coupled device (CCD) camera, and the auxiliary light unit comprises an infrared irradiation unit. However, this disclosure is not limited thereto. In one embodiment, the camera 120 may be disposed on a wearable head-mounted display (HMD), wearable glasses (e.g., AR/VR goggles), an electronic device, other similar devices, or a combination of these devices. This disclosure is not limited thereto.

In one embodiment, the sensor 130 includes, for example, an inertial measurement unit (IMU), an accelerometer, a gyroscope, other similar devices, or a combination of these devices. This disclosure is not limited thereto. That is, the sensor data SD includes an inertial measurement value of the wearing part of the wearable device WD. In one embodiment, the inertial measurement value includes changes in six degrees of freedom (DOF) and the six degrees of freedom comprises three translation values corresponding to three perpendicular axes and three rotation values corresponding to the three perpendicular axes. In other words, the inertial measurement value includes three linear accelerations and three angular accelerations. However, this disclosure is not limited thereto.

In one embodiment, the wearable device WD includes, for example, a ring device, a wristband device, a bracelet device, an anklet device, a belt device, other similar devices, or a combination of these devices. This disclosure is not limited thereto.

In one embodiment, the controller 110 is configured to communicate with the camera 120 and the sensor 130 through either wired communication or wireless communication. That is, the controller 110 is operatively coupled to the camera 120 and the sensor 130. In one embodiment, the controller 110, camera 120, and the sensor 130 may be disposed on separate device. However, in one embodiment, the controller 110 may be integrated with the camera 120 or the sensor 130. That is, this disclosure does not limit the controller is separate from or integrated with the camera 120 and/or the sensor 130.

In one embodiment, the controller 110 is adapted to determine a position conversion relationship between a predetermined position of a body part of the user and a tracking position of the wearing part of the user. That is, the controller 110 is configured to convert the predetermined position to the tracking position or to convert the tracking position to the predetermined position based on the position conversion relationship. In other words, the position conversion relationship indicates a relationship between a predetermined position of a body part of a user and a tracking position of a wearing part of the user.

In addition, the camera 120 is configured to obtain the camera data CD of a previous moment (e.g., time T-1). The camera data CD may include an image of the wearable device WD. The sensor 130 is configured to obtain the sensor data SD of the previous moment. The controller 110 is configured to obtain the camera data CD of the previous moment and the sensor data SD of the previous moment. Based on the camera data CD and the sensor data SD, the controller 110 is configured to determine the position conversion relationship based on the camera data CD of the previous moment and the sensor data SD of the previous moment. Further, the controller 110 is configured to output the fusion data FD of the wearing part of a current moment (e.g., time T) based on the position conversion relationship.

In this manner, the controller 110 is able to determine the user's operation (behavior) based on not only the camera data CD of the camera 120, but also the sensor data SD of the sensor 130. That is, while the user stays in the blind spot of the camera 120, the controller 110 is still able to determine the user's operation based the fusion data FD. In addition, a camera frequency of the camera data CD may be slower than a sensor frequency of the sensor data. In one embodiment, the camera frequency is 30 frame per second (FPS) and the sensor frequency is 500fps, but this disclosure is not limited thereto. Since the sensor frequency is higher than the camera frequency, the fusion data may have a fusion frequency higher than the camera frequency. Therefore, the frequency of the fusion frequency may be improved and the size of wearable device WD may be reduced, thereby improving the convenience and comfort of wearing the wearable device WD.

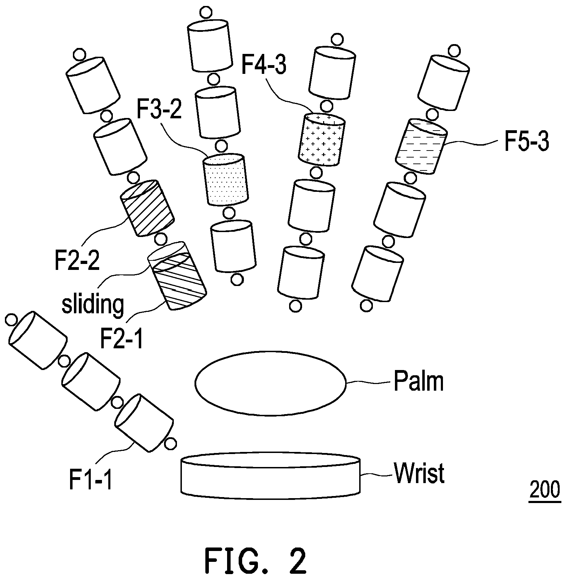

FIG. 2 is a schematic diagram of a wearable device disposed on a wearing part of a user according to an embodiment of the disclosure. With reference to FIG. 1 to FIG. 2, a scenario 200 of FIG. 2 shows that a wearable device may be disposed on different knuckles or difference fingers of the user. Due to the length of the fingers of different users are different from each other, the position conversion relationships from the predetermined position of the body part (e.g., the wrist) to the tracking position of the wearing part of the wearable device WD vary from person to person. In other words, while different users are request to perform a same operation (e.g., certain movement), the variation in displacement or angle may vary from person to person.

In addition, even if the same operation is performed by one same user, the variation in displacement or angle still varies while the wearable device WD is disposed on different body parts. For example, the user may wear the wearable device WD on at least one of knuckle F1-1, knuckle F2-1, knuckle F2-2, knuckle F3-2, knuckle F4-3, and knuckle 5-3 of different fingers, thereby changing the detected data of the camera 120 or sensor 130. Further, since the wearing part of the user is not a rigid body, a sliding of the wearable device WD may happen when the user performs operation. While the sliding of the wearable device WD happens, the detected data of the camera 120 or sensor 130 also changes.

Therefore, in order to improve the accuracy of the camera data CD and the sensor data SD, it is necessary to determine where the wearing part of the wearable device WD. Once the wearing part of the wearable device WD is determined, the result would be the same while different users perform a same operation and thereby improving the user experience.

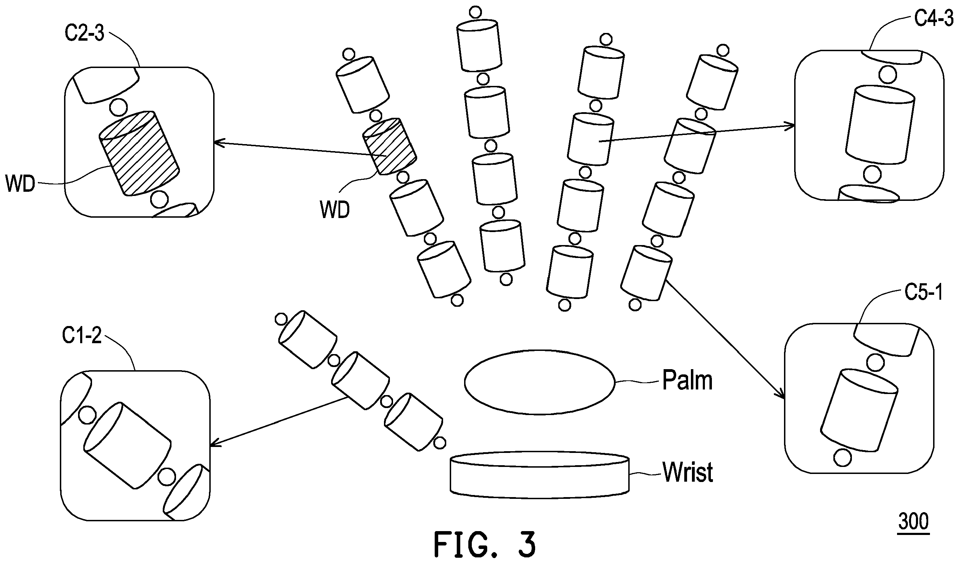

FIG. 3 is a schematic diagram of a wearable device disposed on a wearing part of a user according to an embodiment of the disclosure. With reference to FIG. 1 to FIG. 3, a scenario 300 of FIG. 3 shows that the wearing part of the wearable device WD may be determined by analyzing each body part of the user respectively. In one embodiment, each body part of the user may be analyzed based on the camera data CD of the camera 120. In another embodiment, each body part of the user may be analyzed based on the sensor data SD of the sensor 130. In yet another embodiment, each body part of the user may be analyzed based on the camera data CD of the camera and the sensor data SD of the sensor 130. That is, this disclosure does not limit how the location of the wearing part is determined.

In this embodiment, each body part of the user may be analyzed based on the camera data CD of the sensor 120. For example, a plurality of camera images C1-2, C2-3, C4-3, C5-1 may be obtained by the camera 120. The controller 110 is configured to analyze the plurality of camera images C1-2, C2-3, C4-3, C5-1 based on image recognition technology to determine where the wearable device WD is disposed on. Further, the controller 110 is configured to analyze the plurality of camera images C1-2, C2-3, C4-3, C5-1 based on image recognition technology to determine whether a sliding of the wearable device SD happens or not. In this embodiment, based on the camera image C2-3, the controller 110 is configured to determine a camera-identified position of the wearing part (of the previous moment) as the tracking position. In other words, the controller determines that the wearable device is disposed on the third knuckle of the index finger. Based on the tracking position (i.e., camera-identified position) and the predetermined position (e.g., wrist), the controller 110 is further configured to determine the position conversion relationship to output the fusion data FD which indicating (reflecting / corresponding to) the user's operation.

In one embodiment, the controller 110 is configured to notify the user to perform a certain (predetermined) posture (e.g., making a gesture of "five" with the hand). The camera 120 is configured to obtain a posture image of the user with the predetermined posture and the camera data CD includes the posture image. The controller 110 is configured to determine the camera-identified position of the wearing part (of the previous moment) as the tracking position based on the posture image. Further, the controller is configured to determine the position conversion relationship based on the predetermined position and the tracking position. That is, the controller 110 may be configured to notify the user to perform a predetermined posture before determining the location of the wearing part of the wearable device WD to increase the efficiency of identification. However, in another embodiment, the controller 110 may be configured to determine the location of the wearing part of the wearable device without notifying the user to perform a certain posture. This disclosure is not limited thereto.

In one embodiment, the controller 110 is configured to notify the user to perform a sequence of predetermined posture sequence (e.g., making the gestures of "one" to "five" with the hand). The camera 120 is configured to obtain a plurality of posture sequence images of the user performing the predetermined posture sequence. Based on the plurality of posture sequence images, the controller 110 is configured to determine the tracking position and then to determine the position conversion relationship to output the fusion data FD which indicating (reflecting / corresponding to) the user's operation.

Other than determining the tracking position based on the camera data CD, in one embodiment, the controller 110 may be configured to determine a sensor-identified position of the wearing part (of the previous moment) as the tracking position based on the sensor data SD. Also, the controller 110 may be configured to notify the user to perform a predetermined posture before determining the tracking position based on the sensor data SD to increase the efficiency of identification. In one embodiment, the sensor data may include a posture parameter of the user with a predetermined posture. The posture parameter may include the inertial measurement value of the wearing part of the wearable device WD while the user is with the predetermined posture. The specific processes thereof can be seen with reference to the embodiments of determining the tracking position based on the camera data CD, while the details are not redundantly described seriatim herein.

Moreover, other than determining the tracking position based on only the camera data CD or the sensor data SD, the controller 110 may be configured to determine a camera-identified position of the wearing part (of the previous moment) based on the camera data CD and a sensor-identified position of the wearing part (of the previous moment) based on the sensor data SD at the same time. Further, the controller 110 is configured to determine the tracking position of the wearing part based on the camera-identified position of the camera data CD and the sensor-identified position of the sensor data SD. In one embodiment, the tracking position is determined by obtaining a fusion position (of the previous moment) by fusing the camera data CD and the sensor data SD based on a Kalman filter. Furthermore, the controller 110 is configured to determine the position conversion relationship based on the predetermined position and the tracking position and then to obtain the fusion data of the current moment which indicating (reflecting / corresponding to) the user's operation based on the position conversion relationship.

Similarly, the controller 110 may be configured to notify the user to perform a predetermined posture or a sequence of predetermined posture sequence before determining the tracking position based on the camera data CD and the sensor data SD to increase the efficiency of identification. The specific processes thereof can be seen with reference to the aforementioned embodiments of determining the tracking position, while the details are not redundantly described seriatim herein.

Therefore, since tracking position of the wearing part of the wearable device WD is determined, the fusion data FD would reflect the user's operation more precisely and thereby improving the user experience.

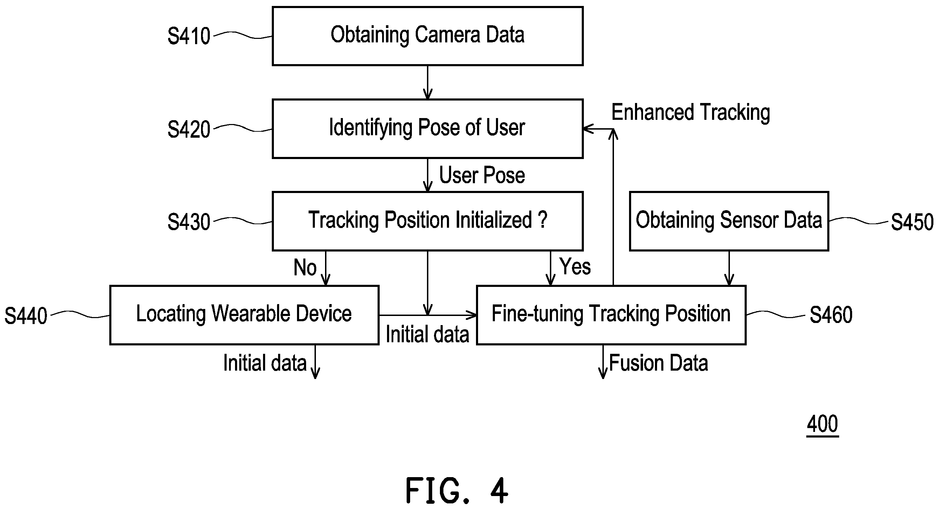

FIG. 4 is a schematic flowchart of a control method according to an embodiment of the disclosure. With reference to FIG. 1 to FIG. 4, in one embodiment, the control method 400 includes step S410, step S420, step S430, step S440, step S450, and step S460.

In the step S410, the camera data CD is obtained by the camera 120. In the step S420, the pose of the user is identified by the controller 110 based on the camera data CD and the user pose is obtain for the next step S430. In the step S430, the controller 110 is configured to determine whether the tracking position is initialized or not. That is, the controller 110 determines that whether there is an initial position of the location of the wearable device WD or not.

In the step S440, if the initial position of the location of the wearable device WD is not found, the controller 110 is further determine the tracking position of the wearable device WD based on the camera data CD and the user pose. In other words, the controller 110 locates where the wearable device WD is based on the camera data CD and the user pose. The tracking position is determined as the initial data (or initial position) and is the initial data is further outputted.

In the step S450, the sensor data SD is obtained by the sensor 130. In the step S460, if the initial position of the location of the wearable device WD is found, the controller 110 is further configured to fine-tune the tracking position by fusing the camera data CD and the sensor data SD based on a Kalman filter. The fusion data FD is then obtained by the controller 110 based on the fine-tuned tracking position and the position conversion relationship. Therefore, the fusion data FD would reflect the user's operation more precisely and thereby improving the user experience.

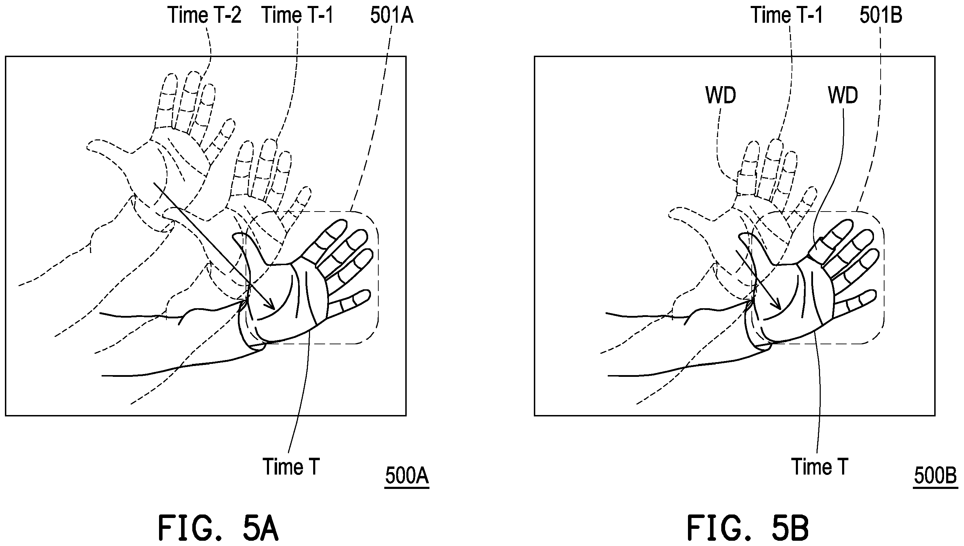

FIG. 5A is a schematic diagram of a tracking the user according to an embodiment of the disclosure. With reference to FIG. 1 to FIG. 5A, a scenario 500A of FIG. 5A shows that tracking the hand of the user based on the camera 120. In this embodiment, from two previous consecutive moments (e.g., time T-2 and time T-1) to the current moment (e.g., time T), the hand of the user may perform an operation. Specifically, from the one moment before the previous moment (e.g., time T-2) to the previous moment (e.g., time T-1), the hand of the user moves from a first position to a second position. Then, from the previous moment (e.g., time T-1) to the current (time T), the hand of the user moves form the second position to a third position.

In this embodiment, the controller 110 may be configured to obtain the third position by extrapolating based on the first position and the second position. In other words, the controller is configured to determine a camera-predicted position as a predicted position 501A of the current moment by an extrapolation based on the camera data CD of the two previous consecutive moments (e.g., time T-2 and time T-1). It is noted that, in the condition that the hand of the user moves along a same direction, the predicted position 501A may be accurate. However, in the condition that the hand of the user does not move along a same direction, the predicted position 501A may not be accurate.

FIG. 5B is a schematic diagram of a tracking the user according to an embodiment of the disclosure. With reference to FIG. 1 to FIG. 5A, a scenario 500B of FIG. 5B shows that tracking the hand of the user based on the camera 120 and the sensor 130. In this embodiment, the wearable device WD is disposed on the wearing part of the user and the sensor 130 is included in the wearable device WD. At the previous moment (e.g., time T-1), the camera data CD of the previous moment is obtained by the camera 120 and the sensor data SD of the previous moment is obtained by the sensor 130. Based on the camera data CD, the controller is configured to determine a camera-predicted position of the current moment by an extrapolation. The sensor data SD may include an acceleration value or a displacement value of the hand of the user of the previous moment. Based on the sensor data SD (e.g., the acceleration value or the displacement value), the controller 110 is configured to determine a sensor-predicted position of the wearing part of the current moment. Further, the controller 110 is configured to obtain a fusion-predicted position of the current moment as a predicted position 501B by fusing the camera-predicted position and the sensor-predicted position based on a Kalman filter. For example, when the hand of the user tends to stop from a moving or tends to change a direction of a movement, a deceleration (negative acceleration value) may be detected in the sensor data SD. Based on fusing the camera data CD and the sensor data SD, the controller 110 is configured to obtain a fusion-predicted position as the predicted position 501B, which is more acute than the predicted position 501A based on only the camera data. Furthermore, the controller is configured to obtain the fusion data of the current moment based on the fusion-predicted position and the position conversion relationship. Therefore, since the position conversion relationship is determined based on not only the camera data CD but also the sensor data, the fusion data FD would reflect the user's operation more precisely and thereby improving the user experience.

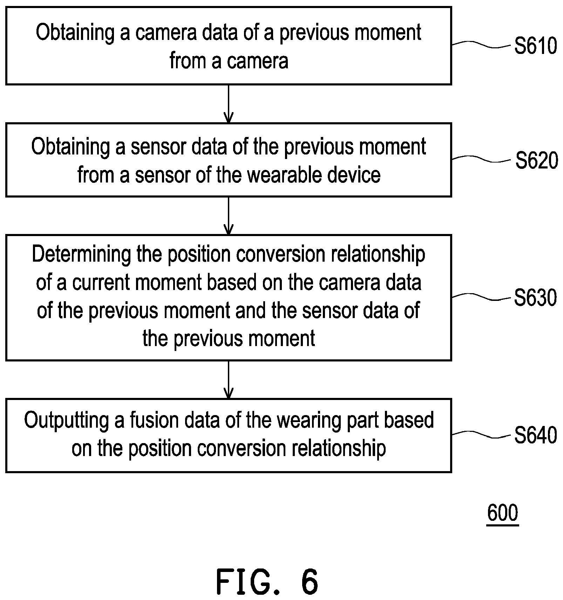

FIG. 6 is a schematic flowchart of a control method according to an embodiment of the disclosure. With reference to FIG. 1 and FIG. 6, the control method 600 includes step S610. step 620, step 630 and step 640.

In the step S610, the camera data CD of a previous moment is obtained from the camera 120. In the step S620, the sensor data SD of the previous moment is obtained from the sensor 130. In the step S630, a position conversion relationship of a current moment is determined based on the camera data CD of the previous moment and the sensor data SD of the previous moment. In the step S640, the fusion data FD of the wearing part is outputted based on the position conversion relationship. In this manner, the fusion data FD would reflect the user's operation more precisely and thereby improving the user experience.

In summary, according to the controller, the control method, and the wearable tracking system of the disclosure, since the tracking position of the wearing part where the wearable device is disposed is determined, the fusion data reflects the user's operation more precisely and thereby improving the user experience. Further, the size of wearable device may be reduced, thereby improving the convenience and comfort of wearing the wearable device.

It will be apparent to those skilled in the art that various modifications and variations can be made to the disclosed embodiments without departing from the scope or spirit of the disclosure. In view of the foregoing, it is intended that the disclosure covers modifications and variations provided that they fall within the scope of the following claims and their equivalents.

## Claims

1. A controller, adapted to determine a position conversion relationship between a predetermined position of a body part of a user and a tracking position of a wearing part of the user, wherein the wearing part is where a wearable device is disposed on the user and the controller is configured to:
obtain a camera data of a previous moment from a camera, wherein the camera data comprises an image of the wearable device;
obtain a sensor data of the previous moment from a sensor of the wearable device; determine the position conversion relationship based on the camera data of the previous moment and the sensor data of the previous moment; and
output a fusion data of the wearing part of a current moment based on the position conversion relationship.

2. The controller according to claim 1, wherein the controller is further configured to:
determine a camera-identified position of the wearing part of the previous moment as the tracking position based on the camera data; and
determine the position conversion relationship based on the predetermined position and the tracking position.

3. The controller according to claim 1, wherein the controller is further configured to:
determine a sensor-identified position of the wearing part of the previous moment as the tracking position based on the sensor data; and
determine the position conversion relationship based on the predetermined position and the tracking position.

4. The controller according to claim 1, wherein the controller is further configured to:
determine a camera-identified position of the wearing part of the previous moment based on the camera data;
determine a sensor-identified position of the wearing part of the previous moment based on the sensor data;
determine the tracking position of the wearing part based on the camera-identified position and the sensor-identified position; and
determine the position conversion relationship based on the predetermined position and the tracking position.

5. The controller according to claim 1, wherein the camera data comprises a posture image of the user with a predetermined posture and the controller is further configured to:
determine a camera-identified position of the wearing part of the previous moment as the tracking position based on the posture image; and
determine the position conversion relationship based on the predetermined position and the tracking position.

6. The controller according to claim 1, wherein the sensor data comprises a posture parameter of the user with a predetermined posture and the controller is further configured to:
determine a sensor-identified position of the wearing part of the previous moment as the tracking position based on the posture parameter; and
determine the position conversion relationship based on the predetermined position and the tracking position.

7. The controller according to claim 1, wherein the camera data comprises a posture image of the user with a predetermined posture, the sensor data comprises a posture parameter of the user with a predetermined posture, and the controller is further configured to:
determine a camera-identified position of the wearing part of the previous moment based on the posture image;
determine a sensor-identified position of the wearing part of the previous moment based on the posture parameter;
determine the tracking position of the wearing part based on the camera-identified position and the sensor-identified position; and
determine the position conversion relationship based on the predetermined position and the tracking position.

8. The controller according to claim 1, wherein the controller is further configured to:
obtain a fusion position of the previous moment as the tracking position by fusing the camera data and the sensor data based on a Kalman filter;
determine the position conversion relationship based on the predetermined position and the tracking position; and
obtain the fusion data of the current moment based on the position conversion relationship.

9. The controller according to claim 1, wherein the controller is further configured to:
determine a camera-predicted position of the wearing part of the current moment by an extrapolation based on the camera data;
determine a sensor-predicted position of the wearing part of the current moment based on an acceleration value or displacement value of the sensor data;
obtain a fusion-predicted position of the current moment by fusing the camera-predicted position and the sensor-predicted position based on a Kalman filter; and
obtain the fusion data of the current moment based on the fusion-predicted position and the position conversion relationship.

10. A control method for a wearable device, comprising:
obtaining a camera data of a previous moment from a camera, wherein the camera data comprises an image of the wearable device;
obtaining a sensor data of the previous moment from a sensor of the wearable device;
determining a position conversion relationship based on the camera data of the previous moment and the sensor data of the previous moment, wherein the position conversion relationship indicates a relationship between a predetermined position of a body part of a user and a tracking position of a wearing part of the user and the wearing part is where the wearable device is disposed on the user; and
outputting a fusion data of the wearing part of a current moment based on the position conversion relationship.

11. The control method for the wearable device according to claim 10, further comprising:
determining a camera-identified position of the wearing part of the previous moment based on the camera data;
determining a sensor-identified position of the wearing part of the previous moment based on the sensor data;
determining the tracking position of the wearing part based on the camera-identified position and the sensor-identified position; and
determining the position conversion relationship based on the predetermined position and the tracking position.

12. The control method for the wearable device according to claim 10, further comprising:
obtaining a posture image of the user with a predetermined posture from the camera data;
determining a camera-identified position of the wearing part of the previous moment as the tracking position based on the posture image; and
determining the position conversion relationship based on the predetermined position and the tracking position.

13. The control method for the wearable device according to claim 10, further comprising:
obtaining a posture image of the user with a predetermined posture from the camera data;
obtaining a posture parameter of the user with the predetermined posture from the sensor data;
determining a camera-identified position of the wearing part of the previous moment based on the posture image;
determining a sensor-identified position of the wearing part of the previous moment based on the posture parameter;
determining the tracking position of the wearing part based on the camera-identified position and the sensor-identified position; and
determining the position conversion relationship based on the predetermined position and the tracking position.

14. The control method for the wearable device according to claim 10, further comprising:
obtaining a fusion position of the previous moment as the tracking position by fusing the camera data and the sensor data based on a Kalman filter;
determining the position conversion relationship based on the predetermined position and the tracking position; and
obtaining the fusion data of the current moment based on the position conversion relationship.

15. A wearable tracking system, comprising:
a camera, configured to obtain a camera data of a previous moment, wherein the camera data comprises an image of a wearable device;
the wearable device, comprising a sensor, wherein the sensor is configured to obtain a sensor data of the previous moment; and
a controller, wherein the controller is configured to:
determine a position conversion relationship based on the camera data of the previous moment and the sensor data of the previous moment, wherein the position conversion relationship indicates a relationship between a predetermined position of a body part of a user and a tracking position of a wearing part of the user and the wearing part is where the wearable device is disposed on the user; and
output a fusion data of the wearing part of a current moment based on the position conversion relationship.
